# EUROPÄISCHE PATENTSCHRIFT

(11) **EP 2 029 786 B1**
(45) Veröffentlichungstag und Bekanntmachung des Hinweises auf die Patenterteilung: **19.01.2011**
(21) Anmeldenummer: 07729718.2
(22) Anmeldetag: 31.05.2007
(51) Int. Cl.: C22C 38/40

(54) **HITZEBESTÄNDIGER LAGERWERKSTOFF**
HEAT-RESISTANT BEARING MATERIAL
MATÉRIAU DE ROULEMENT RÉSISTANT À LA TEMPÉRATURE

(30) Priorität: 22.06.2006 DE 102006029121
(43) Veröffentlichungstag der Anmeldung: 04.03.2009
(73) Patentinhaber: Mahle International GmbH, 70376 Stuttgart (DE)
(72) Erfinder: RUCH, Roland, 79650 Schopfheim (DE); STEINERT, Lutz, 79650 Schopfheim (DE); WINTRICH, Klaus, 79650 Schopfheim (DE)
(74) Vertreter: BRP Renaud & Partner
(86) Internationale Anmeldenummer: PCT/EP2007/055312
(87) Internationale Veröffentlichungsnummer: WO 2007/147710

(56) Entgegenhaltungen:
- EP-A- 0 739 994
- EP-A1- 0 668 367
- JP-A- 8 260 102
- US-A- 4 927 601

## Beschreibung

Die Erfindung betrifft einen hitzebeständigen Lagerwerkstoff aus einer austenitischen Eisenmatrix-Legierung und beschäftigt sich dabei mit dem Problem, einen solchen Lagerwerkstoff für einen Einsatz bei hohen Temperaturen funktionssicher auszubilden und zwar insbesondere für Temperaturen oberhalb 600° C insbesondere oberhalb 850° C. Es soll sich dabei um einen Lagerwerkstoff handeln, der Festschmierstoffeigenschaften besitzt, die bei den angegebenen hohen Temperaturen in einem möglichst hohen Maße erhalten bleiben sollen.

EP0739994 A1 offenbart einen martensitischen Stahl für hitzebeständige Lagerelemente.

Gelöst wird diese Aufgabe durch einen Lagerwerkstoff nach den kennzeichnenden Merkmalen des Anspruchs 1.

Vorteilhafte Legierungen eines solchen Lagerwerkstoffes sind Gegenstand der Unteransprüche.

Die Erfindung beruht auf dem allgemeinen Gedanken, einen Schwefelanteil in einer Größe vorzusehen, durch den sich, für eine Schmierwirkung notwendige Sulfide innerhalb der Legierung ausbilden können. Eine derartige Sulfidbildung innerhalb einer austenitischen Matrix-Legierung, die hohe Kriechbeständigkeit und eine hohe Festigkeit bei hohen Temperaturen aufweisen soll, ist an sich ein Widerspruch. Dieser Widerspruch ergibt sich daraus, dass in einem solchen Material enthaltene Sulfide für eine hohe Kriechbeständigkeit sowie hohe Festigkeit als Gefügestörung bei hohen Temperaturen an sich nach allgemeinem Fachwissen nachteilig und deshalb zu vermeiden sind. Die Erfindung schlägt daher etwas vor, was an sich mit Bezug auf das Ziel, einen hoch kriechbeständigen und temperaturmäßig festen, auch bei hohen Temperaturen noch Festschmierstoffeigenschaften aufweisenden Werkstoff zu erhalten, dem allgemeinen Fachwissen absolut entgegengerichtet ist und daher ein überraschendes, von einem Fachmann nicht zu erwartendes Ergebnis darstellt.

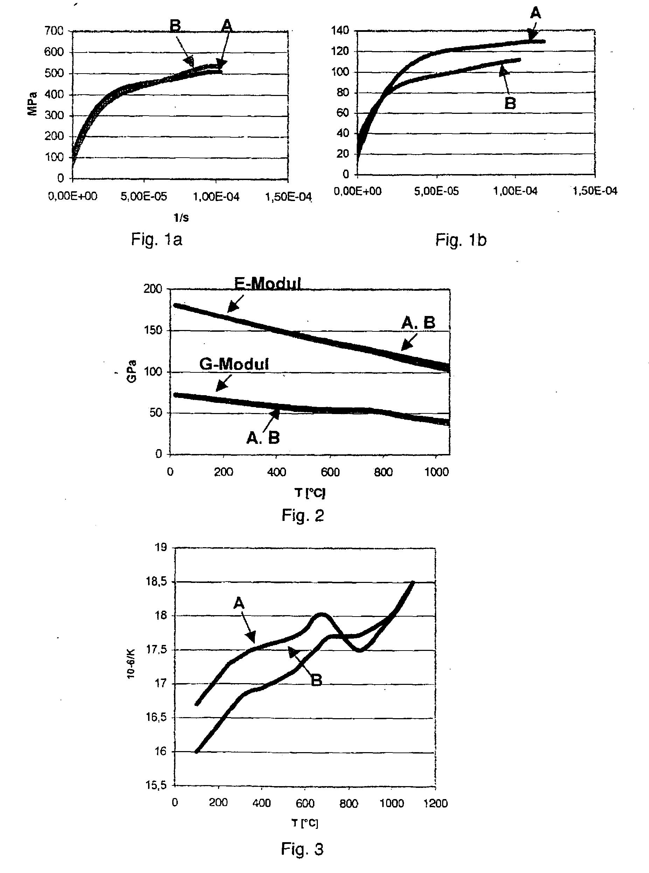

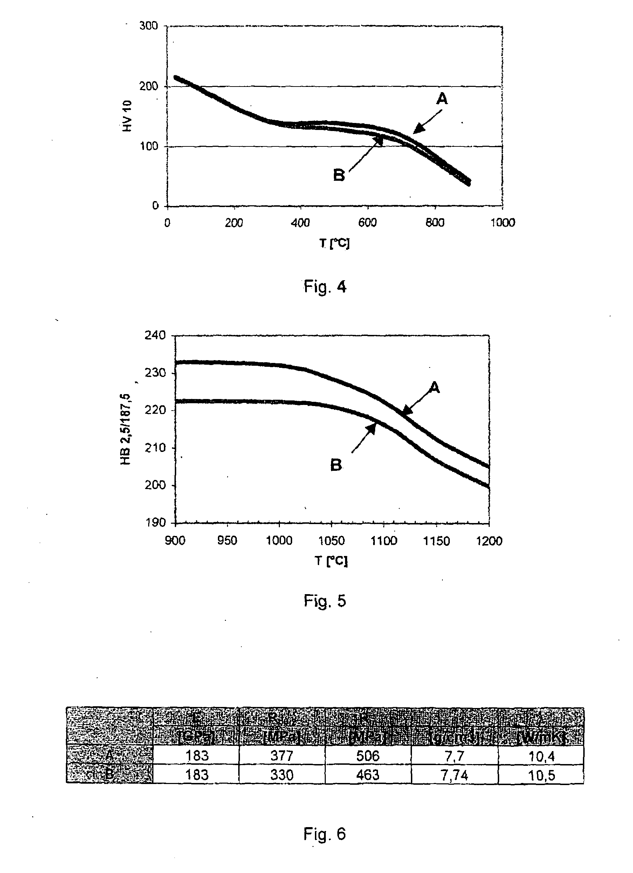

In der Zeichnung sind einige Eigenschaftsdiagramme für erfindungsgemäße Lagermaterialien angegeben. Die in den einzelnen Diagrammen angegebenen Kurven betreffen, soweit sie mit A bezeichnet sind, einen Werkstoff nach Anspruch 2 und soweit sie mit B bezeichnet sind, einen Werkstoff nach An-pruch 3.

Erläuterung zu den einzelnen Diagrammen
Fig. 1a, 1b
   Diese Diagramme zeigen das Kriechverhalten der Legierungen A und B bei einer stufenförmigen Belastung eine Probe in Schritten von 2 MPa, einer Haltedauer von 35 sec und bei einer Messung der Kriechrate in den letzten 5 sec der Haltedauer und zwar in Teil a für ein Kriechverhalten bei 700° C und in Teil b für ein Kriechverhalten bei 900° C.
Fig. 2
   In diesem Diagramm sind aufgetragen der Elastizitätsmodul E sowie der Schubmodul G der Legierungen A und B in Abhängigkeit der Temperatur.
Fig. 3
   Dieses Diagramm zeigt den thermischen Ausdehnungskoeffizienten der Legierungen A und B in Abhängigkeit der Temperatur.
Fig. 4
   Bei diesem Diagramm ist in der Ordinate die Warmhärte (in HV10) in Abhängigkeit der Temperatur bei den Legierungen A und B aufgetragen.
Fig. 5
   Auf der Ordinate ist die Härte (in HB 2,5/187,5) der Legierungen A und B nach einer Auslagerung von jeweils 2 Stunden und einer Luftabkühlung in Abhängigkeit der Temperatur gezeigt.
Fig. 6
   Diese Fig. enthält eine Tabelle in der für die Legierungen A und B jeweils bei Raumtemperatur angegeben sind Werte für p = Dichte, λ = Wärmeleitfähigkeit, Rₚ₀₂ = Dehngrenze, Rₘ = Zugfestigkeit, E = Elastizitätsmodul. Alle in der Beschreibung und in den nachfolgenden Ansprüchen dargestellten Merkmale können sowohl einzeln als auch in beliebiger Form miteinander erfindungswesentlich sein.

## Patentansprüche

1. Hitzebeständiger Lagerwerkstoff aus einer austenitischen Eisenmatrix-Legierung
- mit einem, zur Erzielung einer Festschmierstoffwirkung an seinen Lagerflächen ausreichenden Schwefelanteil und
- mit einem Anteil von 1 bis 6 Gewichts-% eines oder mehrerer der Legierungselemente Wolfram (W), Cobald (Co), Niob (Nb), Rhenium (Re), Molybdän (Mo), Tantal (Ta), Vanadium (V), Hafnium (Hf), Yttrium (Y), Zirconium (Zr), enthaltend
folgende
Legierungselemente in Gewichts-%,
| | |
|---|---|
| C | = 0,4 - 0,6 |
| Cr | = 18 - 27 |
| Nb | = 1,4 - 1, 8 |
| Ni | = 12 - 22 |
| S | = 0,2 - 0,5 |
| Si | = 2,9 - 3,2 |
| W | = 2,4 - 2, 8 |
| Rest = | Eisen inkl. unvermeidbarer Verunreinigungen. |

2. Schaufellagerring nach Anspruch 1, **gekennzeichnet durch** die folgende Legierungszusammensetzung mit Angaben der einzelnen Legierungselemente jeweils in Gewichts-%
| | |
|---|---|
| C | = 0,4-0,6 |
| Cr | = 18,5 - 20,5 |
| Nb | = 1,4 - 1,8 |
| Ni | = 12,5 - 14 |
| S | = 0,25 - 0,45 |
| Si | = 2,9 - 3,15 |
| W | = 2,4 - 2, 8 |
| Rest = | Eisen inkl. unvermeidbarer Verunreinigungen. |

3. Schaufellagerring nach Anspruch 1, **gekennzeichnet durch** die folgende Legierungszusammensetzung mit Angaben der einzelnen Legierungselemente jeweils in Gewichts-%
| | |
|---|---|
| C | = 0,4 - 0,6 |
| Cr | = 24,5 - 26,5 |
| Nb | = 1,4 - 1,8 |
| Ni | = 19,5 - 21,5 |
| S | = 0,25 - 0,45 |
| Si | = 2, 9 - 3,15 |
| W | = 2,4 - 2,8 |
| Rest = | Eisen inkl. unvermeidbarer Verunreinigungen. |

## Claims

1. A heat-resistant bearing material consisting of an austenitic iron matrix alloy
- containing a sufficient sulfur percentage to achieve a solid lubricant action on its bearing surfaces, and
- between 1 and 6 %w/w of one or more of the alloy elements tungsten (W), cobalt (Co), niobium (Nb), rhenium (Re), molybdenum (Mo), tantalum (Ta), vanadium (V), hafnium (Hf), yttrium (Y), zirconium (Zr),
containing the following alloy elements each indicated in %w/w,
| | |
|---|---|
| C | = 0.4 - 0.6 |
| Cr | = 18 - 27 |
| Nb | = 1.4 - 1.8 |
| Ni | = 12 - 22 |
| S | = 0.2 - 0.5 |
| Si | = 2.9 - 3.2 |
| W | = 2.4 - 2.8 |
| Residue | = Iron incl. unavoidable contaminants. |

2. The paddle bearing ring according to claim 1, **characterized by** the following alloy composition, wherein the individual alloy elements are each indicated in %w/w,
| | |
|---|---|
| C | = 0.4 - 0.6 |
| Cr | = 18.5 - 20.5 |
| Nb | = 1.4 - 1.8 |
| Ni | = 12.5 - 14 |
| S | = 0.25 - 0.45 |
| Si | = 2.9 - 3.15 |
| W | = 2.4 - 2.8 |
| Residue = | Iron incl. unavoidable contaminants. |

3. The paddle bearing ring according to claim 1, **characterized by** the following alloy composition, wherein the individual alloy elements are each indicated in %w/w,
| | |
|---|---|
| C | = 0.4 - 0.6 |
| Cr | = 24.5 - 26.5 |
| Nb | = 1.4 - 1.8 |
| Ni | = 19.5 - 21.5 |
| S | = 0.25 - 0.45 |
| Si | = 2.9 - 3.15 |
| W | = 2.4 - 2.8 |
| Residue = | Iron incl. unavoidable contaminants. |

## Revendications

1. Matériau réfractaire pour paliers, consistant en un alliage austénitique à base d'une matrice en fer
- avec une teneur en soufre suffisant pour obtenir, sur ses surfaces de palier, un effet de lubrifiant sec et
- avec une teneur comprise entre 1 et 6 % en poids d'un ou de plusieurs des éléments d'alliage tungstène (W), Cobalt (Co), niobium (Nb), rhénium (Re), molybdène (Mo), tantale (Ta), vanadium (V), hafnium (Hf), yttrium (Y), zirconium (Zr),
contenant les éléments d'alliage suivants, en % en poids
| | |
|---|---|
| C | = 0,4 - 0,6 |
| Cr | = 18 - 27 |
| Nb | = 1,4 - 1,8 |
| Ni | = 12 - 22 |
| S | = 0,2 - 0,5 |
| Si | = 2,9 - 3,2 |
| W | = 2,4 - 2,8 |
| reste | = fer y compris les impuretés inévitables. |

2. Bague de palier pour aubes selon la revendication 1, **caractérisée par** la composition d'alliage suivante, chacun des éléments d'alliage étant indiqué en % en poids %
| | |
|---|---|
| C | = 0, 4 - 0,6 |
| Cr | = 18,5 - 20,5 |
| Nb | = 1, 4 - 1, 8 |
| Ni | = 12,5 - 14 |
| S | = 0,25 - 0,45 |
| Si | = 2, 9 - 3,15 |
| W | = 2,4 - 2,8 |
| reste | = fer y compris les impuretés inévitables. |

3. Bague de palier pour aubes selon la revendication 1, **caractérisée par** la composition d'alliage suivante, chacun des éléments d'alliage étant indiqué en % en poids %
| | |
|---|---|
| C | = 0,4 - 0,6 |
| Cr | = 24,5 - 26,5 |
| Nb | = 1,4 - 1,8 |
| Ni | = 19,5 - 21,5 |
| S | = 0,25 - 0,45 |
| Si | = 2,9 - 3,15 |
| W | = 2,4 - 2,8 |
| reste | = fer y compris les impuretés inévitables. |
